# EUROPEAN PATENT APPLICATION

(11) **EP 4 815 513 A1**
(43) Date of publication of application: **30.09.2026**
(21) Application number: 24902711.1
(22) Date of filing: 06.12.2024
(51) Int. Cl.: H04W 4/02

(54) **FREQUENCY BAND SPLICING METHOD AND RELATED APPARATUS**

(30) Priority: 15.12.2023 CN 202311743378
(71) Applicant: Huawei Technologies Co., Ltd., Shenzhen, Guangdong 518129 (CN)
(72) Inventor: PENG, Xiaohui, Shenzhen, Guangdong 518129 (CN); LIN, Guiping, Shenzhen, Guangdong 518055 (CN); ZHUANG, Zhihao, Shenzhen, Guangdong 518055 (CN); QIAN, Bin, Shenzhen, Guangdong 518129 (CN)
(74) Representative: Gill Jennings & Every LLP
(86) International application number: PCT/CN2024/137287
(87) International publication number: WO 2025/124290

(57) **Abstract**

This application provides a frequency band stitching method and a related apparatus. In the frequency band stitching method provided in this application, both a first communication device and a second communication device participate in sensing signal sending and processing. The second communication device extracts auxiliary information based on an echo signal corresponding to a sensing signal sent by the first communication device, and feeds back the auxiliary information to the first communication device. The first communication device fuses and stitches echo signals of different sensing signals based on an echo signal corresponding to a sensing signal sent by the second communication device and the auxiliary information, and performs CIR estimation based on a UWB signal obtained through stitching. In this way, related information of a target is obtained.

## Description

This application claims priority to Chinese Patent Application No. 202311743378.6, filed with the China National Intellectual Property Administration on December 15, 2023 and entitled "FREQUENCY BAND STITCHING METHOD AND RELATED APPARATUS", which is incorporated herein by reference in its entirety.

### TECHNICAL FIELD

This application relates to the communication field, and in particular, to a frequency band stitching method and a related apparatus.

### BACKGROUND

An ultra-wideband (ultra-wideband, UWB) technology is a technology in which data is transmitted by sending and receiving extremely narrow pulses at the nanosecond or sub-nanosecond scale, thereby achieving a bandwidth on the order of gigahertz (GHz). The UWB technology may be used in the sensing field.

A technical solution for implementing sensing by using the UWB technology is as follows: A sensing initiator (initiator) sends a sensing signal, and an echo signal resulting from reflection or scattering of the sensing signal by a target arrives at a sensing responder (responder). The sensing responder performs channel impulse response (channel impulse response, CIR) estimation based on the echo signal, and feeds back a CIR parameter to the sensing initiator. The sensing initiator may extract information such as a distance, an angle, and a velocity of the sensing target based on the CIR parameter.

However, using the foregoing technical solution for sensing may lead to a technical problem of inaccurate sensing.

### SUMMARY

This application provides a frequency band stitching method and a related apparatus, to improve sensing accuracy of environment sensing implemented based on a UWB technology.

According to a first aspect, this application provides a frequency band stitching method, applied to a first communication device. The method includes:
receiving first information from a second communication device, where the first information includes parameter information of a first echo signal, and the first echo signal is an echo signal of a first sensing signal; receiving a second echo signal, where the second echo signal is an echo signal of a second sensing signal; and determining an ultra-wideband UWB signal based on the second echo signal and the first information.

In a bistatic sensing mode, both a sensing responder and a sensing initiator send sensing signals, and both the sensing initiator and the sensing responder participate in echo signal processing. Therefore, better frequency band stitching effect is achieved, accuracy of CIR estimation performed by a communication device is improved, and sensing accuracy is improved.

In addition, because the first communication device and the second communication device send sensing signals to each other, the first communication device can extract more features of a target in an environment based on the UWB signal obtained through stitching, so that sensing accuracy is improved.

In some implementations, the parameter information of the first echo signal includes at least one of the following information: a frequency band of the first echo signal, a bandwidth of the first echo signal, a frequency difference between a center frequency of the first echo signal and a channel center frequency, a quantity of sampling points of the first echo signal, a real part of the first echo signal, an imaginary part of the first echo signal, or an identifier indicating a frequency band stitching reference signal.

In some implementations, the first information further includes sensing information obtained based on the first echo signal.

In some implementations, the sensing information includes at least one of the following information: a quantity of scattering centers, a relative distance distribution between the scattering center and a communication device that receives the first echo signal, or a geometric type parameter distribution of the scattering center.

The second communication device processes the first echo signal in advance to obtain the sensing information, so that efficiency of performing frequency band stitching based on the first echo signal and the second echo signal by the first communication device can be improved.

In some implementations, a relative distance between any two of the scattering centers is greater than or equal to a second threshold, and/or an energy value corresponding to any one of the scattering centers is greater than or equal to a third threshold.

The second communication device prunes a redundant scattering center based on relative distances and energy of the scattering centers, so that impact of the redundant scattering center on frequency band stitching can be avoided, and therefore sensing accuracy is improved.

In some implementations, determining the ultra-wideband UWB signal based on the second echo signal and the first information includes:
obtaining a first fitted signal, where the first fitted signal is a signal obtained by fitting the first echo signal by using a first scattering center model; obtaining a second fitted signal, where the second fitted signal is a signal obtained by fitting the second echo signal by using a second scattering center model, and a model order of the second scattering center model is the same as a model order of the first scattering center model; and determining the UWB signal based on the first fitted signal and the second fitted signal.

In some implementations, a model order corresponding to the first echo signal is lower than a model order corresponding to the second echo signal, and the model order of the first scattering center model and the model order of the second scattering center model are the same as the model order corresponding to the first echo signal.

In some implementations, determining the ultra-wideband UWB signal based on the first fitted signal and the second fitted signal includes:
if an error between the first fitted signal and the first echo signal is less than or equal to a first threshold, and an error between the second fitted signal and the second echo signal is less than or equal to the first threshold, fitting the first echo signal by using a third scattering center model to obtain a third fitted signal, and fitting the second echo signal by using a fourth scattering center model to obtain a fourth fitted signal, where a model order of the third scattering center model is the same as a model order of the fourth scattering center model, and the model order of the third scattering center model is less than the model order of the first scattering center model; and determining the UWB signal based on the third fitted signal and the fourth fitted signal.

In some implementations, determining the ultra-wideband UWB signal based on the first fitted signal and the second fitted signal includes:
if the error between the first fitted signal and the first echo signal is greater than the first threshold, and the error between the second fitted signal and the second echo signal is greater than the first threshold, fitting the first echo signal by using a fifth scattering center model to obtain a fifth fitted signal, and fitting the second echo signal by using a sixth scattering center model to obtain a sixth fitted signal, where a model order of the sixth scattering center model is the same as a model order of the fifth scattering center model, and the model order of the fifth scattering center model is greater than the model order of the first scattering center model; and determining the UWB signal based on the fifth fitted signal and the sixth fitted signal.

When the UWB signal is obtained by stitching the first echo signal and the second echo signal, a model order of a scattering center model corresponding to the first echo signal is aligned with a model order of a scattering center model corresponding to the second echo signal, to ensure accuracy of a non-coherent factor estimated during correlation processing, and therefore improve frequency band stitching effect and improve sensing accuracy.

According to a second aspect, this application provides a frequency band stitching method, applied to a second communication device. The method includes:
sending first information to a first communication device, where the first information includes parameter information of a first echo signal, and the first echo signal is an echo signal of a first sensing signal; and sending a second sensing signal.

In some implementations, the parameter information of the first signal includes at least one of the following information: a frequency band of the first echo signal, a bandwidth of the first echo signal, a frequency difference between a center frequency of the first echo signal and a channel center frequency, a quantity of sampling points of the first echo signal, a real part of the first echo signal, an imaginary part of the first echo signal, or an identifier indicating a frequency band stitching reference signal.

In some implementations, the first information further includes sensing information obtained based on the first echo signal.

In some implementations, the sensing information includes at least one of the following information: a quantity of scattering centers, a relative distance distribution between the scattering center and the second communication device, or a geometric type parameter distribution of the scattering center.

In some implementations, a relative distance between any two of the scattering centers is greater than or equal to a second threshold, and/or an energy value corresponding to any one of the scattering centers is greater than or equal to a third threshold.

In some implementations, there is a preset association relationship between a frequency band in which the second sensing signal is located and the first information.

When the frequency band in which the second sensing signal sent by the second communication device is located is a preset optimal frequency band, stitching effect of a UWB signal can be improved when the first echo signal and a second echo signal are stitched, and therefore sensing accuracy is improved.

According to a third aspect, this application provides a frequency band stitching apparatus. The frequency band stitching apparatus includes functional modules configured to implement any frequency band stitching method mentioned in the foregoing implementations. Optionally, each module may be implemented by software and/or hardware.

According to a fourth aspect, this application provides a frequency band stitching apparatus. The apparatus includes a processor. The processor is coupled to a memory, and may be configured to execute instructions in the memory, to implement any frequency band stitching method mentioned in the foregoing implementations. Optionally, the apparatus further includes the memory. Optionally, the apparatus further includes a communication interface, and the processor is coupled to the communication interface.

According to a fifth aspect, this application provides a computer-readable medium. The computer-readable medium stores program code to be executed by a device, and the program code is used to perform any frequency band stitching method mentioned in the foregoing implementations.

According to a sixth aspect, this application provides a computer program product. The computer program product includes a computer program. When the computer program is executed by a processor, any frequency band stitching method mentioned in the foregoing implementations is implemented.

### BRIEF DESCRIPTION OF DRAWINGS

The accompanying drawings herein are incorporated into this specification and constitute a part of this specification, to show embodiments in accordance with this application, and are used, together with this specification, to explain the principle of this application.
FIG. 1A and FIG. 1B are diagrams of two application scenarios according to this application;
FIG. 2 is a diagram of a sensing scenario in a bistatic sensing mode;
FIG. 3 is a schematic flowchart of a frequency band stitching method according to an embodiment of this application;
FIG. 4 is a schematic flowchart of a frequency band stitching method according to an embodiment of this application;
FIG. 5 is a diagram of effect of fitted signals obtained by fitting echo signals by using GTD models in a simulation experiment according to this application;
FIG. 6A and FIG. 6B are comparison diagrams of effect before and after correlation recovery is performed on upper and lower subbands in a simulation experiment according to this application;
FIG. 7 is a diagram of frequency-domain effect of a full-band UWB signal obtained by stitching upper and lower subbands in a simulation experiment according to this application;
FIG. 8 is a diagram of time-domain effect of a full-band UWB signal obtained by stitching upper and lower subbands in a simulation experiment according to this application;
FIG. 9A and FIG. 9B are diagrams of model orders corresponding to different echo signals before and after scattering center pruning at a signal-to-noise ratio of 20 dB in a simulation experiment according to this application;
FIG. 10A and FIG. 10B are diagrams of model orders corresponding to different echo signals before and after scattering center pruning at a signal-to-noise ratio of 30 dB in a simulation experiment according to this application;
FIG. 11 is a comparison diagram of normalized mean square errors under different algorithms in a simulation experiment according to this application;
FIG. 12 is a diagram of a structure of a frequency band stitching apparatus according to an embodiment of this application;
FIG. 13 is a diagram of a structure of a frequency band stitching apparatus according to another embodiment of this application; and
FIG. 14 is a diagram of a structure of a frequency band stitching apparatus according to still another embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application to a person skilled in the art with reference to particular embodiments.

### DESCRIPTION OF EMBODIMENTS

Example embodiments are described in detail herein, and examples of the example embodiments are presented in the accompanying drawings. In the following descriptions with reference to the accompanying drawings, unless otherwise specified, same numbers in different drawings represent same or similar elements. Implementations described in the following example embodiments do not represent all implementations consistent with this application. On the contrary, the implementations are merely examples of apparatuses and methods that are described in detail in the appended claims and that are consistent with some aspects of this application.

Technical solutions provided in this application are applicable to a wireless personal area network (wireless personal area network, WPAN) based on a UWB technology. For example, a method provided in this application is applicable to an institute of electrical and electronics engineers (institute of electrical and electronics engineers, IEEE) protocol, for example, the IEEE 802.11be/Wi-Fi 7/extremely high throughput (extremely high throughput, EHT) protocol, the IEEE 802.11bn/Wi-Fi 8/ultra-high reliability (ultra-high reliability, UHR) protocol, the IEEE 802.15/UWB protocol, the IEEE 802.11bf/sensing/sensing protocol, or a future-generation UWB WPAN standard. Examples are not listed one by one herein. The method provided in this application may be further applied to various communication systems, for example, an internet of things (internet of things, IoT) system, an internet of vehicles (Vehicle to X, V2X) system, and a narrowband internet of things (narrowband internet of things, NB-IoT) system; and is applied to a device in an internet of vehicles, an internet of things node, a sensor, and the like in an internet of things, a smart camera, a smart remote control, and a smart water meter or electricity meter in a smart home, and a sensor and the like in a smart city. The method provided in this application is also applicable to a long term evolution (long term evolution, LTE) frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, an LTE system, a 5th generation (5th generation, 5G) communication system, a 6th generation (6th generation, 6G) communication system, and the like.

The UWB technology is a new wireless communication technology in which data is transmitted by using non-sinusoidal narrow pulses at the nanosecond scale. Through modulation of impulse pulses with very steep rise and fall times, a UWB pulse occupies a wide spectrum range, thereby enabling a signal to achieve a bandwidth on the order of GHz. A bandwidth used by the UWB is usually above 1 GHz. Because the UWB pulse is very narrow and a radiation spectral density is extremely low, a UWB wireless communication system has advantages such as a strong multipath resolving capability, low power consumption, and high confidentiality, which are beneficial for coexistence with another system, thereby improving spectrum utilization and a system capacity. In addition, during short-range communication application, transmit power of a UWB transmitter may be usually lower than 1 milliwatt (mW). Theoretically, interference generated by a UWB signal is equivalent only to wideband white noise. This facilitates good coexistence between ultra-wideband and existing narrowband communication. Therefore, the UWB system and a narrowband (narrowband, NB) communication system can simultaneously operate without interfering with each other. The method provided in this application may be implemented by a communication apparatus in a wireless communication system. In a communication apparatus, a module that implements a UWB system function may be referred to as a UWB module (for example, may be configured to send a UWB pulse), and a module that implements a narrowband communication system function may be referred to as a narrowband communication module. The UWB module and the narrowband communication module may be different apparatuses, chips, or the like. This is not limited in embodiments of this application. Certainly, the UWB module and the narrowband communication module may alternatively be integrated into one apparatus or chip. Implementations of the UWB module and the narrowband communication module in the communication apparatus are not limited in embodiments of this application.

The method provided in this application may be implemented by a communication apparatus in a wireless communication system, and the communication apparatus may be an apparatus in a UWB system. For example, the communication apparatus may include but is not limited to a communication server, a router, a switch, a bridge, a computer, and a mobile phone. For another example, the communication apparatus may include a central control point, for example, a personal area network (personal area network, PAN) or a PAN coordinator (coordinator). For another example, the communication apparatus may include user equipment (user equipment, UE), and the user equipment may include various handheld devices, vehicle-mounted devices, wearable devices, internet of things devices, compute devices or other processing devices connected to a wireless modem, or the like that have a wireless communication function. For another example, the communication apparatus may include a chip, and the chip may be disposed in a communication server, a router, a switch, a user terminal, or the like. Examples are not listed one by one herein.

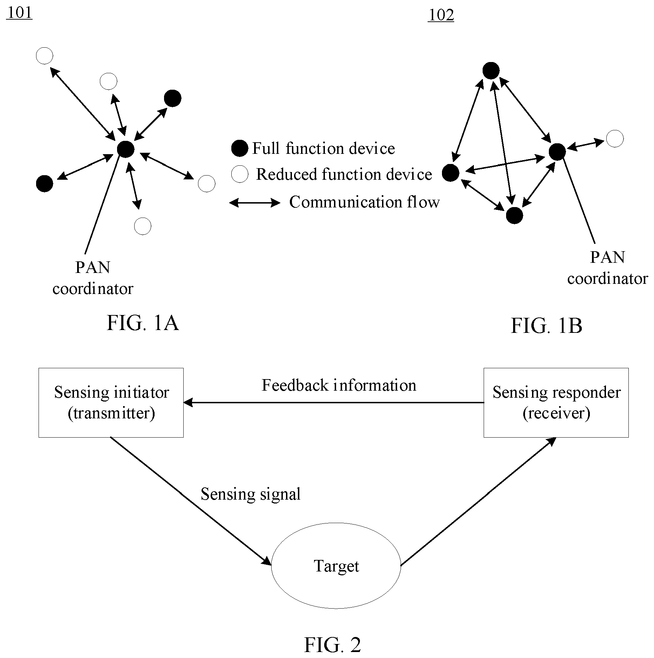

FIG. 1A and FIG. 1B are diagrams of two application scenarios according to this application. In a system 101 shown in FIG. 1A, a plurality of full function devices (full function devices, FFDs) and a plurality of reduced function devices (reduced function devices, RFDs) form a communication system with a star topology (star topology). One of the FFDs is a PAN controller. In the communication system with the star topology, the PAN controller performs data transmission with one or more other devices, that is, a one-to-many or many-to-one data transmission architecture may be established between a plurality of devices. In a system 102 shown in FIG. 1B, a plurality of FFDs and one RFD form a communication system with a peer-to-peer topology (peer-to-peer topology) or a mesh topology. One of the FFDs is a PAN controller. In the communication system with the peer-to-peer topology, a many-to-many data transmission architecture may be established between a plurality of different devices. In FIG. 1A and FIG. 1B, both the FFD and the RFD may be understood as devices shown in this application. The full function device and the reduced function device are relative concepts. For example, the reduced function device cannot be a PAN coordinator. For another example, compared with the full function device, the reduced function device may have no coordination capability or have a lower communication rate. It may be understood that the PAN coordinator shown in FIG. 1B is merely an example, and the other three full function devices shown in FIG. 1B may also be used as PAN coordinators, which are not shown one by one herein.

It should be understood that FIG. 1A and FIG. 1B are merely simplified diagrams for ease of understanding, and do not constitute a limitation on an application scenario of this application. For example, the system 101 and/or the system 102 may further include another FFD and/or another RFD. For another example, the PAN coordinator in the system 101 may also be a coordinator, and/or the PAN coordinator in the system 102 may also be a coordinator.

It can be learned from the definition formula of range resolution that a range resolution is inversely proportional to an effective correlation bandwidth of a signal, that is, a wider effective correlation bandwidth of the signal indicates a smaller value of the range resolution, and a smaller value of the range resolution indicates a stronger resolving capability. A UWB signal has an extremely wide bandwidth, and has a strong resolving capability in a wireless multipath environment. Therefore, the physical world can be observed and understood based on the UWB signal. The basic principle of UWB sensing is as follows: A pair of UWB devices serve as a sending node and a receiving node respectively. The sending node sends a sensing signal. The receiving node completes channel impulse response (channel impulse response, CIR) estimation based on the received sensing signal, and extracts information such as a distance, an angle, and a velocity of a sensing target in an environment based on a CIR parameter.

Devices related to a UWB sensing process may include a sensing initiator (initiator) and a sensing responder (responder). The sensing initiator and the sensing responder are relative concepts. For example, if the sensing initiator is a party that initiates a sensing procedure, the sensing responder may be a party that responds to the party that initiates the sensing procedure. For example, the sensing initiator may be a transmit end of a sensing signal, and the sensing responder may be a receive end of the sensing signal. For another example, the sensing initiator may be a receive end of a sensing signal, and the sensing responder is a transmit end of the sensing signal. It may be understood that a sensing signal sent by the sensing initiator first arrives at a target, and then arrives at the sensing responder (for example, the sensing signal arrives at the sensing responder after being reflected or scattered by the target, and a signal that arrives at the sensing responder after the sensing signal is reflected or scattered by the target is equivalent to an echo signal of the sensing signal).

FIG. 2 is a diagram of a sensing scenario in a bistatic sensing mode. As shown in FIG. 2, the bistatic sensing (bistatic sensing) mode refers to a sensing scenario based on a sensing responder. A sensing initiator (initiator) is a transmitter (transmitter, TX) (or a device that sends a sensing signal), and the sensing responder (responder) is a receiver (receiver, RX) (or a device that receives a sensing signal). The sensing initiator sends a sensing signal, and the sensing responder performs CIR estimation based on a received sensing signal reflected or scattered by a sensing object. When the sensing responder has a capability of extracting target information based on a CIR parameter, the sensing initiator may obtain related information of a target in an environment based on feedback information.

For a low-cost and low-power UWB device, limited by performance of an analog-to-digital converter (analog-to-digital converter, ADC), the UWB device is incapable of sending a UWB signal. An effective solution is to synthesize a UWB signal by using a plurality of pieces of subband data in different frequency bands, and complete CIR estimation based on the synthesized UWB signal. In an example, in the scenario shown in FIG. 2, when the sensing initiator and the sensing responder are low-cost and low-power UWB devices, the sensing initiator may send a plurality of sensing packets (sensing packets). The sensing packet may be understood as a pulse sensing signal. Echo signals of the plurality of pulse sensing signals reflected or scattered by the target arrive at the sensing responder. The plurality of echo signals are equivalent to a plurality of pieces of subband data. The sensing responder may perform stitching based on the plurality of echo signals to obtain a UWB signal, and perform CIR estimation on the UWB signal obtained through stitching. The sensing initiator obtains related information of the target in the environment based on feedback information.

However, in the bistatic sensing mode, only a single device participates in sensing signal sending, that is, all sensing signals are sent by the sensing initiator and received by the sensing responder; and the sensing responder performs CIR estimation based on the received sensing signal, that is, only a single device participates in sensing signal processing. Consequently, frequency band stitching effect is poor. In another aspect, the sensing signal is from a single device, and therefore the sensing responder can infer only partial features of the target in the environment based on the received sensing signal.

To resolve the foregoing problem, this application provides a frequency band stitching method and a related apparatus, to improve sensing accuracy of environment sensing implemented based on a UWB technology.

In the technical solutions provided in this application, both a sensing initiator and a sensing responder participate in sensing signal sending. The sensing responder extracts auxiliary information based on an echo signal corresponding to a sensing signal sent by the sensing initiator, and feeds back the auxiliary information to the sensing initiator. The sensing initiator fuses and stitches echo signals of different sensing signals based on an echo signal corresponding to a sensing signal sent by the sensing responder and the auxiliary information, and performs CIR estimation based on a UWB signal obtained through stitching. In this way, related information of a target is obtained.

Without loss of generality, the following uses interaction between a first communication device and a second communication device as an example to describe in detail the frequency band stitching method provided in embodiments of this application. The first communication device and the second communication device are a sensing initiator and a sensing responder in a UWB sensing system. For example, the first communication device is a sensing initiator (initiator), and the second communication device is a sensing responder (responder); or the first communication device is a sensing responder (responder), and the second communication device is a sensing initiator (initiator). This is not limited herein.

By way of example, and not limitation, the first communication device may be a device having a communication capability in a WPAN, for example, an FFD or an RFD. Similarly, the second communication device may also be a device having a communication capability in the WPAN, for example, an FFD or an RFD.

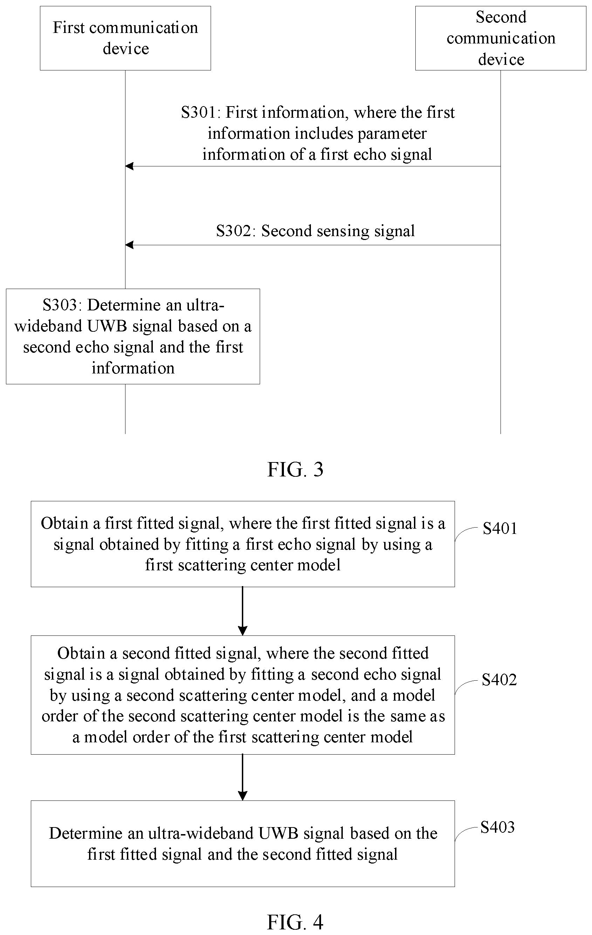

FIG. 3 is a schematic flowchart of a frequency band stitching method according to an embodiment of this application. As shown in FIG. 3, the frequency band stitching method is applied to a bistatic sensing mode scenario, and includes the following steps:
S301: A second communication device sends first information to a first communication device, where the first information includes parameter information of a first echo signal. Correspondingly, the first communication device receives the first information from the second communication device.

In the bistatic sensing mode, the first communication device first sends a first sensing signal. Correspondingly, the second communication device receives the first echo signal resulting from reflection or scattering of the first sensing signal by a target. The second communication device may obtain the parameter information of the first echo signal based on the received first echo signal. In an actual scenario, usually, the target may be approximately a group of discrete scattering centers. That the first sensing signal is scattered by the target is actually equivalent to that the first sensing signal is affected by the target. Therefore, the second communication device may further obtain sensing information based on the first echo signal, and the sensing information is used to describe related information of the scattering centers in the scenario.

In this step, the first information includes the parameter information of the first echo signal, and the second communication device sends the parameter information of the echo signal to the first communication device by using the first information. Optionally, the first information may further include the sensing information obtained based on the first echo signal.

In some implementations, the parameter information of the first echo signal may include at least one of the following information: a frequency band of the first echo signal, a bandwidth of the first echo signal, a frequency difference between a center frequency of the first echo signal and a channel center frequency, a quantity of sampling points of the first echo signal, a real part of the first echo signal, an imaginary part of the first echo signal, or an identifier indicating a frequency band stitching reference signal.

In some implementations, the sensing information may include at least one of the following information: a quantity of scattering centers, a relative distance distribution between the scattering center and a communication device that receives the first echo signal, or a geometric type parameter distribution of the scattering center.

In an example, the first information is represented in a form of signaling, and a data format indicating the parameter information and the sensing information of the first echo signal is shown in Table 1.

**Table 1**

| Bit (bits) | 0 to 5 | 6 to 9 | 10 to 16 | 17 to 30 | 31 to 37 | 38 | 39 | Variable | Variable | Variable | Variable |
|---|---|---|---|---|---|---|---|---|---|---|---|
| Parameter symbol | *M* | *N_{channel}* | *B* | *offset* | *N* | *reference* | Reserved | *Re*(*s_{f}*) | *Imag*(*s_{f}*) | *rₖ* | *αₖ* |

The quantity (*M*) of scattering centers occupies bits 0 to 5 of the signaling. A binary value of the bits corresponding to "*M*" is converted into a decimal value. For example, if the bits corresponding to "*M*" are (00000)₂, after being converted into a decimal value, (00000)₂=(0)₁₀; and if the bits corresponding to "*M*" are (11111)₂, a corresponding decimal value is (11111)₂=(63)₁₀. The quantity of scattering centers is a positive integer. Therefore, after the binary value of the bits corresponding to *M* is converted into the decimal value, the decimal value needs to be further incremented by 1. Correspondingly, a value range of "*M*" is 1 to 64, and a minimum change unit is 1. It may be understood that, in a UWB sensing process, fitting needs to be performed on data of an echo signal by using a scattering center model, and the quantity "*M*" of scattering centers is an order of a corresponding scattering center model in a fitting process.

The frequency band (*N_{channel}*) in which the first echo signal is located occupies bits 6 to 9 of the signaling. A binary value of the bits corresponding to "*N_{channel}*" is converted into a decimal value. For example, if the bits corresponding to "*N_{channel}*" are (0000)₂, after being converted into a decimal value, (0000)₂=(0)₁₀; and if the bits corresponding to "*N_{channel}*" are (1111)₂, a corresponding decimal value is (1111)₂=(15)₁₀. Therefore, a value range of "*N_{channel}*" is 0 to 15, and a minimum change unit is 1. It should be noted that, in this embodiment of this application, a specific frequency band is specified for the first echo signal, and the frequency band is divided into a total of 16 different frequency bands, that is, a frequency band 0 to a frequency band 15. A value of the frequency band "*N_{channel}*" in which the first echo signal is located in Table 1 indicates that the first echo signal is specifically located in a frequency band *N_{channel}*. For example, if a value of the bits corresponding to "*N_{channel}*" is (0011)₂, it indicates that the frequency band of the first echo signal is a frequency band 3 in the specified frequency band.

The bandwidth (*B*) of the first echo signal occupies bits 10 to 16 of the signaling, and a value of the bandwidth (*B*) satisfies a formula: *B*=(*value₁*)₁₀*5+100. Herein, "(*value₁*)₁₀" is a decimal value obtained by converting a binary value of the bits corresponding to "*B*". For example, if the bits corresponding to "*B*" are (0000000)₂, the value of "*B*" is 100; and if the bits corresponding to "*B*" are (1111111)₂, the value of "*B*" is 735. Therefore, a value range of "*B*" is 100 megahertz (MHz) to 735 MHz, and a minimum change unit is 5 MHz.

The frequency difference (*offset*) between the center frequency of the first echo signal and the channel center frequency occupies bits 17 to 37 of the signaling, and a value of the frequency difference (*offset*) satisfies a formula: *offset*=(-1)^{*symbol*₁+1}*(*value₂*)₁₀*0.1. Herein, "*symbol₁*" is a 1^{st} bit in the bits corresponding to "*offset*", that is, 0 or 1 of the bit 17 in the signaling, and "(*value₂*)₁₀" is a decimal value obtained by converting a binary value of the last 13 bits in the bits corresponding to "*offset*". For example, if the bits corresponding to "*offset*" are (10000000000001)₂, the value of "*offset*" is 0.1; and if the bits corresponding to "*offset*" are (11111111111111)₂, the value of "*offset*" is 819.1. It should be noted that when the bits corresponding to "*offset*" are (00000000000000)₂, the value of "*offset*" is -819.2. Therefore, a value range of "*offset*" is -819.2 MHz to 819.1 MHz, and a minimum change unit is 0.1 MHz. It should be noted that the frequency band of the first echo signal indicates that the first echo signal is specifically located in the frequency band *N_{channel}*, and the channel center frequency herein is a channel center frequency of the frequency band *N_{channel}*.

The quantity (*N*) of sampling points of the first echo signal occupies bits 31 to 37 of the signaling. A binary value of the bits corresponding to "*N*" is converted into a decimal value. For example, if the bits corresponding to "*N*" are (0000000)₂, after being converted into a decimal value, (0000000)₂=(0)₁₀; and if the bits corresponding to "*N*" are (1111111)₂, a corresponding decimal value is (1111111)₂=(127)₁₀. The quantity of sampling points is a positive integer. Therefore, after the binary value of the bits corresponding to *"N"* is converted into the decimal value, the decimal value needs to be further incremented by 1. Correspondingly, a value range of "*N*" is 1 to 127, and a minimum change unit is 1.

The identifier (*reference*) indicating the frequency band stitching reference signal occupies a bit 38 of the signaling, a value of "*reference*" is 0 or 1, and 0 or 1 may respectively indicate a sensing initiator (initiator) or a sensing responder (responder). It may be determined based on "*reference*" that when subbands are stitched, a subband on a specified side is used as a reference for stitching.

The bit 39 of the signaling is a reserved bit.

A position of bits, of the signaling, occupied by the real part (*Re*(*s_{f}*)) of the first echo signal satisfies a formula: 40-(*N**16+39), where "*N*" is the quantity of sampling points of the first echo signal. A value of "*Re*(*s_{f}*)" satisfies a formula: *Re*(*s_{f}*)=(-1)^{*symbol*₂+1} ∗ (*value₃*)₁₀ ∗ 2⁻¹⁵. Herein, "*symbol₂*" is 0 or 1 indicated by a 1^{st} bit in the bits corresponding to "*Re*(*s_{f}*)", and "(*value₃*)₁₀" is a decimal value obtained by converting a binary value of remaining bits other than the 1^{st} bit in the bits corresponding to "*Re*(*s_{f}*)". It should be noted that, if the bits corresponding to "*Re*(*s_{f}*)" are (000000000000)₂, the value of "*Re*(*s_{f}*)" is -1. A value range of "*Re*(*s_{f}*)" is -1 to 1-2⁻¹⁵, and a minimum change unit of "*Re*(*s_{f}*)" is 2⁻¹⁵. It may be understood that the real part of the first echo signal is a real part of the first echo signal in frequency domain.

A position of bits, of the signaling, occupied by the imaginary part (*Imag*(*s_{f}*)) of the first echo signal satisfies a formula: (*N**16+40)-(*N**32+39), where "*N*" is the quantity of sampling points of the first echo signal. A value of "*Imag*(*s_{f}*)" satisfies a formula: *Imag*(*s_{f}*)=(-1)^{*symbol*₃+1} ∗ (*value₄*)₁₀ ∗ 2⁻¹⁵. Herein, "*symbol₃*" is 0 or 1 indicated by a 1^{st} bit in the bits corresponding to "*Imag*(*s_{f}*)", and "(*value₄*)₁₀" is a decimal value obtained by converting a binary value of remaining bits other than the 1^{st} bit in the bits corresponding to "*Imag*(*s_{f}*)". It should be noted that, if the bits corresponding to "*Imag*(*s_{f}*)" are (000000000000)₂, the value of "*Imag*(*s_{f}*)" is -1. A value range of "*Imag*(*s_{f}*)" is -1 to 1-2⁻¹⁵, and a minimum change unit of "*Imag*(*s_{f}*)" is 2⁻¹⁵. It may be understood that the imaginary part of the first echo signal is an imaginary part of the first echo signal in frequency domain.

A position of bits, of the signaling, occupied by the relative distance distribution (*r*ₖ) between the scattering center and the communication device that receives the first echo signal satisfies a formula: (*N**32+40)-(*N**32+39+*M**13), where "*N*" is the quantity of sampling points of the first echo signal, and "*M*" is the quantity of scattering centers. A value of "*r*ₖ" satisfies a formula: *r*ₖ=(-1)^{*symbol*₄+1} ∗ (*value₅*)₁₀ ∗ 2⁻⁸. Herein, "*symbol₄*" is 0 or 1 indicated by a 1^{st} bit in the bits corresponding to "*r*ₖ", and "(*value₅*)₁₀" is a decimal value obtained by converting a binary value of remaining bits other than the 1^{st} bit in the bits corresponding to "*r*ₖ". It should be noted that, if the bits corresponding to "*r*ₖ" are (0000000000000)₂, the value of "*r*ₖ" is -2⁻⁴. A value range of "*r*ₖ" is -2⁻⁴ to 2⁴-2⁻⁸, and a minimum change unit of "*r*ₖ" is 2⁻⁸ meters (m).

A position of bits, of the signaling, occupied by the geometric type parameter distribution (*αₖ*) of the scattering center satisfies a formula: (*N**32+40+*M**13)-(*N**32+39+*M**16), where a value range of "*αₖ*" is [-2, -1, -1/2, 0, 1/2, 1, 3/2, 2], and different values correspond to different geometric structure types. For example, when a value of "*αₖ*" is -1, it indicates that a geometric type of the scattering center is corner diffraction; or when a value of "*αₖ*" is -0.5, it indicates that a geometric type of the scattering center is edge diffraction.

According to the data structure shown in Table 1, a length of the signaling corresponding to the first information ranges from 11 bytes (bytes) to 645 bytes.

It may be understood that Table 1 shows merely an example data structure. When it is ensured that both a sensing initiator and a sensing responder can extract the parameter information and/or the sensing information of the echo signal from the data structure, specific positions and quantities of bits occupied by the parameters in the signaling corresponding to the first information may be adjusted.

S302: The second communication device sends a second sensing signal. Correspondingly, the first communication device receives a second echo signal resulting from reflection or scattering of the second sensing signal by the target.

It may be understood that, in this embodiment of this application, a sensing signal exchanged between the sensing initiator and the sensing responder passes through the target. For ease of description, a process in which the sensing signal passes through the target is not shown in the schematic flowchart. For example, a sensing signal sent by the sensing initiator is reflected or scattered by the target, and an echo signal corresponding to the sensing signal arrives at the sensing responder. A brief description is as follows: The sensing initiator sends the sensing signal, and correspondingly, the sensing responder receives the echo signal resulting from reflection or scattering of the sensing signal by the target.

S303: The first communication device determines an ultra-wideband UWB signal based on the second echo signal and the first information.

In this step, because the first information includes the parameter information of the first echo signal, it is equivalent to that the first communication device receives the first echo signal. Because a delay and an initial phase of the first echo signal at the second communication device are different from a delay and an initial phase of the second echo signal at the first communication device, the first echo signal and the second echo signal are mutually incoherent. Therefore, when the first echo signal and the second echo signal are fused and stitched, correlation recovery needs to be first performed on data of the two echo signals.

The first echo signal and the second echo signal are equivalent to two different subbands, and a common method for correlation recovery between subbands is as follows: First, an appropriate frequency band model is established for subband frequency domain data fitting. Then, one of the subbands is used as a reference to estimate a non-correlated factor between the subbands. Finally, the non-correlated factor is compensated to a non-reference subband until optimal matching of the subbands is achieved.

In an example, the first communication device processes data of the first echo signal based on a generalized likelihood algorithm, obtains a 1st scattering center and information such as a relative distance of the scattering center and a geometric type of the scattering center, and further processes the data of the first echo signal based on related information of the 1^{st} scattering center, to obtain a 2^{nd} scattering center and related information of the 2^{nd} scattering center. Iteration is performed on the data of the first echo signal in the foregoing manner, until a generalized likelihood ratio obtained through calculation is less than a preset error rate threshold. The first communication device may fit the data of the first echo signal by using a geometrical theory of diffraction (geometrical theory of diffraction, GTD) model based on the quantity of scattering centers that is obtained by processing the first echo signal and related information of the scattering centers. The GTD model satisfies the following formula: $s \left({f}_{n}\right) = {\sum }_{m = 1}^{M} {A}_{m} {\left(j\frac{{f}_{n}}{{f}_{0}}\right)}^{{α}_{m}} exp \left(-\frac{j 4 {πf}_{n}}{c}{r}_{m}\right) , n = 0 , … , N - 1$

*s*(*fₙ*) represents a value of an echo signal in frequency domain after fitting using the GTD model, M represents a quantity of scattering centers, that is, an order of the GTD model, *Aₘ* is an intensity coefficient, namely, a complex amplitude, of an m^{th} scattering center, *αₘ* is a geometric type parameter of the m^{th} scattering center, *rₘ* is a relative distance between the m^{th} scattering center and a reference point, *fₙ* represents a frequency of a signal sampling point, and *f*₀ is a start frequency of a signal.

It may be understood that, when the first information includes the sensing information obtained based on the first echo signal, the first communication device may directly fit the data of the first echo signal based on the sensing information.

Similarly, the first communication device fits data of the second echo signal by using the GTD model based on a quantity of scattering centers that is obtained by processing the second echo signal and related information of the scattering centers. Coherent processing is performed on a signal obtained by fitting the first echo signal and a signal obtained by fitting the second echo signal. During coherent processing, a reference subband is determined based on the identifier "*reference*" that is in the first information and that indicates the frequency band stitching reference signal, and a non-correlated factor is compensated to a non-reference subband until optical matching of the subbands is achieved.

After implementing correlation recovery between the first echo signal and the second echo signal, the first communication device performs initial estimation of scattering center model parameters by using data of the two correlated subbands, and performs joint estimation based on non-coherent parameters of scattering center initial values and the scattering center model parameters.

The first communication device reconstructs a missing frequency band by using the estimated scattering center model parameters, performs interpolation on data between the subbands, and performs extrapolation on data outside the subbands, to obtain a fused UWB full-band signal.

It may be understood that, the first communication device may be a sensing initiator, and the second communication device is a sensing responder. After identities of the first communication device and the second communication device are exchanged, that is, when the first communication device is a sensing responder and the second communication device is a sensing initiator, the frequency band stitching method provided in this application is also applicable to this case.

In this embodiment, both the sensing responder and the sensing initiator in the bistatic sensing mode send sensing signals, and both the sensing initiator and the sensing responder participate in echo signal processing. Therefore, better frequency band stitching effect is achieved, accuracy of CIR estimation performed by a communication device is improved, and sensing accuracy is improved. In addition, because the first communication device and the second communication device send sensing signals to each other, the first communication device can extract more features of the target in an environment based on the UWB signal obtained through stitching, so that sensing accuracy is improved.

In the foregoing embodiment, the first echo signal and the second echo signal are fitted by using a same scattering center model. However, an order of a scattering center model corresponding to the first echo signal may be different from an order of a scattering center model corresponding to the second echo signal. For example, M₁ scattering centers may be obtained by processing the first echo signal based on the generalized likelihood algorithm, and when the first echo signal is fitted by using a GTD model, an order of the GTD model corresponding to the first echo signal is M₁; and M₂ scattering centers may be obtained by processing the second echo signal based on the generalized likelihood algorithm, and when the second echo signal is fitted by using a GTD model, an order of the GTD model corresponding to the second echo signal is M₂, where M₁ and M₂ may be different.

When orders of scattering center models corresponding to two echo signals are not equal, in a process of implementing correlation recovery based on signals obtained by fitting the two echo signals, accuracy of an estimated non-coherent factor decreases, resulting in poor coherent processing effect, thereby affecting frequency band stitching effect and reducing sensing accuracy. To resolve this problem, in the frequency band stitching method provided in this application, before correlation recovery is performed on the signal obtained by fitting the first echo signal and the signal obtained by fitting the second echo signal, it is ensured that the model order of the scattering center model corresponding to the first echo signal is the same as the model order of the scattering center model corresponding to the second echo signal.

FIG. 4 is a schematic flowchart of a frequency band stitching method according to an embodiment of this application. With reference to FIG. 4, the following describes an implementation in which a first communication device determines an ultra-wideband UWB signal based on a second echo signal and first information. It may be understood that step S303 may include S401 to S403.

S401: Obtain a first fitted signal, where the first fitted signal is a signal obtained by fitting a first echo signal by using a first scattering center model.

S402: Obtain a second fitted signal, where the second fitted signal is a signal obtained by fitting the second echo signal by using a second scattering center model, and a model order of the second scattering center model is the same as a model order of the first scattering center model.

It can be learned from step S303 in the embodiment of FIG. 3 that, before fitting an echo signal by using a scattering center model, the first communication device first needs to obtain a quantity of scattering centers and related information corresponding to each scattering center based on the echo signal. The quantity of scattering centers is equivalent to a model order corresponding to the echo signal. When the echo signal is fitted by using a formula of the scattering center model, the foregoing obtained quantity of scattering centers and related information corresponding to each scattering center need to be used.

In the foregoing steps S401 and S402, a model order in a formula of the first scattering center model is a quantity of scattering centers that is obtained by processing the first echo signal, a model order in a formula of the second scattering center model is a quantity of scattering centers that is obtained by processing the second echo signal, and the model order of the first scattering center model is the same as the model order of the second scattering center model, that is, model orders of the two scattering center models are aligned.

In some implementations, when the quantity of scattering centers that is obtained by processing the first echo signal is not equal to the quantity of scattering centers that is obtained by processing the second echo signal, a smaller one of the two quantities is used as a model order of the first scattering center model and the second scattering center model. In a possible implementation, when the quantity of scattering centers that is obtained by processing the first echo signal is less than the quantity of scattering centers that is obtained by processing the second echo signal, it is equivalent to that a model order corresponding to the first echo signal is lower than a model order corresponding to the second echo signal. In this case, the model order of the first scattering center model and the model order of the second scattering center model are the same as the model order corresponding to the first echo signal.

For example, the first communication device processes data of the first echo signal based on a generalized likelihood algorithm, to obtain M₁ scattering centers and relative distance distributions and geometric type parameter distributions that correspond to the M₁ scattering centers, where the model order corresponding to the first echo signal is M₁, and a model order of a first GTD model used to fit the first echo signal is correspondingly M₁. Similarly, it may be determined that the model order corresponding to the second echo signal is M₂. When M₁<M₂, a model order of a second GTD model used to fit the second echo signal is also M₁. In consideration that, when the scattering centers are obtained based on the generalized likelihood algorithm, other scattering centers are obtained through iteration based on a 1^{st} scattering center, when the model order of the second GTD model is M₁, it is equivalent to that remaining M₂-M₁ scattering centers are pruned.

S403: Determine the ultra-wideband UWB signal based on the first fitted signal and the second fitted signal.

It may be understood that stitching echo signals and stitching fitted signals obtained by fitting the echo signals are actually the same. In this step, the first communication device performs correlation recovery on the first fitted signal and the second fitted signal, estimates parameters of a scattering center model by using data of correlated subbands, and finally reconstructs a missing frequency band by using the estimated model parameters, to form the fused UWB signal through interpolation and extrapolation. A specific procedure is consistent with that in step S303, and details are not described herein again.

The first communication device may further calculate an error between the first fitted signal and the first echo signal and an error between the second fitted signal and the second echo signal. In some implementations, when the error between the first fitted signal and the first echo signal is less than or equal to a first threshold, and the error between the second fitted signal and the second echo signal is less than or equal to the first threshold, the first echo signal is fitted by using a third scattering center model to obtain a third fitted signal, and the second echo signal is fitted by using a fourth scattering center model to obtain a fourth fitted signal, where a model order of the third scattering center model is the same as a model order of the fourth scattering center model, and the model order of the third scattering center model is less than the model order of the first scattering center model. The first communication device determines the UWB signal based on the third fitted signal and the fourth fitted signal.

It may be understood that, when an error between a fitted signal and an echo signal is less than or equal to the preset first threshold, it is equivalent to that an overfitting problem exists when the first communication device fits the echo signal by using a scattering center model, that is, a quantity of scattering centers that corresponds to a model order of the scattering center model is greater than a quantity of scattering centers that actually exist in the environment. Therefore, the model order of the scattering center model needs to be reduced to refit the echo signal. In this way, the model order of the third scattering center model is less than the model order of the first scattering center model. In addition, to ensure that model orders of the two scattering center models are aligned, the model order of the fourth scattering center model is the same as the model order of the third scattering center model.

In some implementations, when the error between the first fitted signal and the first echo signal is greater than the first threshold, and the error between the second fitted signal and the second echo signal is greater than the first threshold, the first echo signal is fitted by using a fifth scattering center model to obtain a fifth fitted signal, and the second echo signal is fitted by using a sixth scattering center model to obtain a sixth fitted signal, where a model order of the fifth scattering center model is the same as a model order of the sixth scattering center model, and the model order of the fifth scattering center model is greater than the model order of the first scattering center model. The first communication device determines the UWB signal based on the fifth fitted signal and the sixth fitted signal.

When an error between a fitted signal and an echo signal is greater than the first threshold, it is equivalent to that an underfitting problem exists when the first communication device fits the echo signal by using a scattering center model, that is, a quantity of scattering centers that corresponds to a model order of the scattering center model is less than a quantity of scattering centers that actually exist in the environment. Therefore, the model order of the scattering center model needs to be increased to refit the echo signal. In this way, the model order of the fifth scattering center model is greater than the model order of the first scattering center model. In addition, to ensure that model orders of the two scattering center models are aligned, the model order of the fifth scattering center model is the same as the model order of the sixth scattering center model.

It should be noted that, when one of errors between two fitted signals and echo signals corresponding to the two fitted signals is less than or equal to the first threshold, and the other one of the errors is greater than the first threshold, the first communication device adjusts model orders of scattering center models corresponding to the echo signals in a same manner as that used to resolve the underfitting problem.

It may be understood that, in the foregoing implementations, a process of adjusting a model order of a scattering center model corresponding to an echo signal is actually a trial-and-error process. After the echo signal is fitted by using a new scattering center model, if an underfitting problem or an overfitting problem persists, a model order of the scattering center model corresponding to the echo signal is further adjusted until the underfitting problem changes to an overfitting problem or until the overfitting problem changes to an underfitting problem.

In an example, an error between a fitted signal and an echo signal may be a normalized mean square error. For example, model orders of the first scattering center model and the second scattering center model are both M₁. It can be learned through calculation that a normalized mean square error between the first fitted signal and the first echo signal is greater than the first threshold, and a normalized mean square error between the second fitted signal and the second echo signal is greater than the first threshold. The first communication device may obtain a scattering center and a related parameter corresponding to the scattering center by processing the echo signal based on the generalized likelihood algorithm. Therefore, an (M₁+1)^{th} scattering center and a related parameter of the (M₁+1)^{th} scattering center may be obtained based on the generalized likelihood algorithm and an (M₁)^{th} scattering center obtained by processing the first echo signal, the first echo signal is fitted by using a GTD model whose model order is M₁+1 to obtain a new model fitted signal, and a normalized mean square error between the new model fitted signal and the first echo signal is calculated. If the normalized mean square error is greater than the first threshold, an (M₁+2)^{th} scattering center and a related parameter are obtained based on the (M₁+1)^{th} scattering center, the first echo signal is fitted by using a GTD model whose model order is M₁+2 to obtain a new model fitted signal, and a normalized mean square error between the new model fitted signal and the first echo signal is calculated, until the normalized mean square error between the new model fitted signal and the first echo signal is less than or equal to a second threshold. The foregoing processing method is also applicable to the second echo signal.

In this embodiment, when the UWB signal is obtained by stitching the first echo signal and the second echo signal, the model order of the scattering center model corresponding to the first echo signal is aligned with the model order of the scattering center model corresponding to the second echo signal, to ensure accuracy of a non-coherent factor estimated during correlation processing, and therefore improve frequency band stitching effect and improve sensing accuracy.

It should be noted that the processing method for adjusting model orders of scattering center models to align the model orders in the foregoing embodiments is not only applicable to a bistatic sensing mode scenario, but also applicable to other modes in UWB sensing.

In some implementations, in the embodiment of FIG. 3, the second communication device may further prune the sensing information obtained based on the first echo signal, including: combining scattering centers with a relative distance less than a second threshold, and/or removing a scattering center whose energy is excessively low. The second communication device may obtain a plurality of scattering centers and related information of the plurality of scattering centers based on the first echo signal. The related information includes a relative distance between each of the plurality of scattering centers and another scattering center and echo energy corresponding to each scattering center.

When a relative distance between a scattering center and another scattering center is less than the preset second threshold, a scattering center whose relative distance with the second communication device is shorter in the two scattering centers and related information of the scattering center are retained, and the other scattering center and related information of the other scattering center are removed, where the foregoing processing manner may be understood as combining the two scattering centers; and/or
when echo energy corresponding to a scattering center is less than a preset third threshold, the scattering center and related information of the scattering center are removed.

Correspondingly, in the first information sent by the second communication device to the first communication device, when the first information includes the sensing information obtained based on the first echo signal, a relative distance between any two scattering centers in the sensing information is greater than or equal to the second threshold, and/or an energy value corresponding to any one of the scattering centers is greater than or equal to the third threshold.

In this implementation, the second communication device prunes a redundant scattering center based on relative distances and energy of the scattering centers, so that impact of the redundant scattering center on frequency band stitching can be avoided, and therefore sensing accuracy is improved.

In some implementations, in the embodiment of FIG. 3, there is a preset association relationship between a frequency band in which the second sensing signal sent by the second communication device is located and the first information. In an example, it can be learned from a large quantity of experimental measurements that distribution of targets in an environment and frequency bands in which sensing signals are located affect frequency band stitching effect. In the frequency band stitching method provided in this application, a frequency band of the first echo signal and a geometric type of the scattering center may be classified, and a corresponding optimal frequency band is preset for each class based on an experimental result. After obtaining the parameter information of the first echo signal and the geometric type corresponding to the scattering center, the second communication device may search for a closest class from preset classes, and determine, based on a preset association relationship, an optimal frequency band corresponding to the closest class. The second communication device may send the second sensing signal in the frequency band.

In this implementation, when the frequency band in which the second sensing signal is located is the preset optimal frequency band, stitching effect of the UWB signal can be improved when the first echo signal and the second echo signal are stitched, and therefore sensing accuracy is improved.

The following describes, by using a simulation experiment, beneficial effect of the frequency band stitching method provided in this application. In this simulation experiment, the first echo signal is used as a reference signal during frequency band stitching. A set simulation scenario is shown in Table 2.

**Table 2**

| Simulation environment parameter | Value |
|---|---|
| Scattering center position | [5.0 5.2 5.4] |
| Gap bandwidth | 2 GHz |
| Subband bandwidth | 0.5 GHz |
| Full-band bandwidth | 3 GHz |
| Gap center frequency | 5 GHz |
| Frequency spacing | 10 MHz |
| Signal-to-noise ratio | 30 dB |

Because the first echo signal is used as the reference signal, the simulation scenario includes three scattering centers, which are respectively 5.0 m, 5.2 m, and 5.4 m away from the second communication device. The specified full-band bandwidth is 3 GHz, a bandwidth of the first echo signal and a bandwidth of the second echo signal are 0.5 GHz, the gap bandwidth between the two echo signals is 2 GHz, the gap center frequency is 5 GHz, the frequency spacing between sampling points is 10 MHz, and the communication signal-to-noise ratio is 30 decibels (dB).

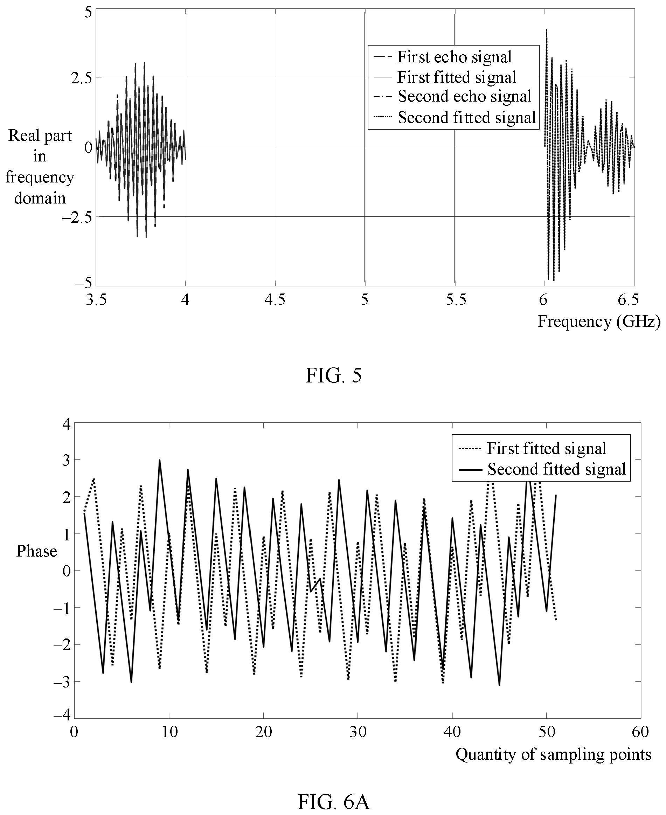

FIG. 5 is a diagram of effect of fitted signals obtained by fitting echo signals by using GTD models in the simulation experiment according to this application. As shown in FIG. 5, a horizontal coordinate represents a frequency; a vertical coordinate represents a real part value of a signal in frequency domain; the first echo signal occupies 3.5 GHz to 4 GHz, equivalent to a lower subband of the two subbands; and the second echo signal occupies 6 GHz to 6.5 GHz, equivalent to an upper subband of the two subbands. It can be learned from FIG. 5 that there is a high degree of matching between a fitted signal and an echo signal, indicating that fitting effect of upper and lower subbands is good.

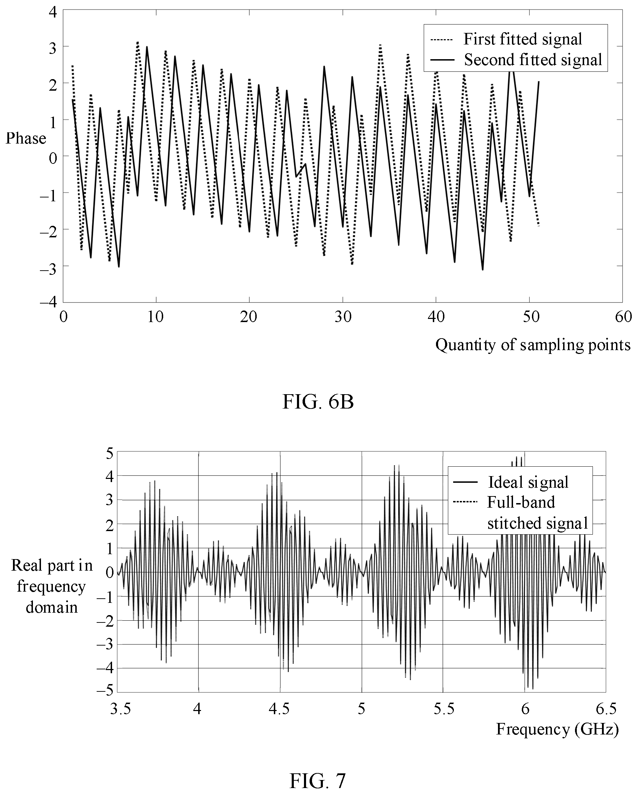

FIG. 6A and FIG. 6B are comparison diagrams of effect before and after correlation recovery is performed on the upper and lower subbands in the simulation experiment according to this application. In FIG. 6A and FIG. 6B, a horizontal coordinate is a quantity of sampling points, a vertical coordinate is a phase of a signal, the first fitted signal is equivalent to the lower subband, and the second fitted signal is equivalent to the upper subband. FIG. 6A is a diagram of phase changes of the first fitted signal and the second fitted signal before correlation recovery is performed, and FIG. 6B is a diagram of phase changes of the first fitted signal and the second fitted signal after correlation recovery is performed. It can be learned from FIG. 6A and FIG. 6B that, when the model order of the first scattering center model is the same as the model order of the second scattering center model, after correlation recovery is performed on the first fitted signal and the second fitted signal, originally weakly correlated fitted signals may be converted into strongly correlated fitted signals.

FIG. 7 is a diagram of frequency-domain effect of a full-band UWB signal obtained by stitching the upper and lower subbands in the simulation experiment according to this application. In FIG. 7, a horizontal coordinate represents a frequency, a vertical coordinate represents a real part value of a signal in frequency domain, and an ideal signal is an ultra-wideband UWB signal directly obtained without considering subband stitching in the simulation experiment. As shown in FIG. 7, a full-band UWB signal obtained by stitching the first fitted signal and the second fitted signal is very close to the ideal UWB signal in frequency domain, indicating that good stitching effect is achieved.

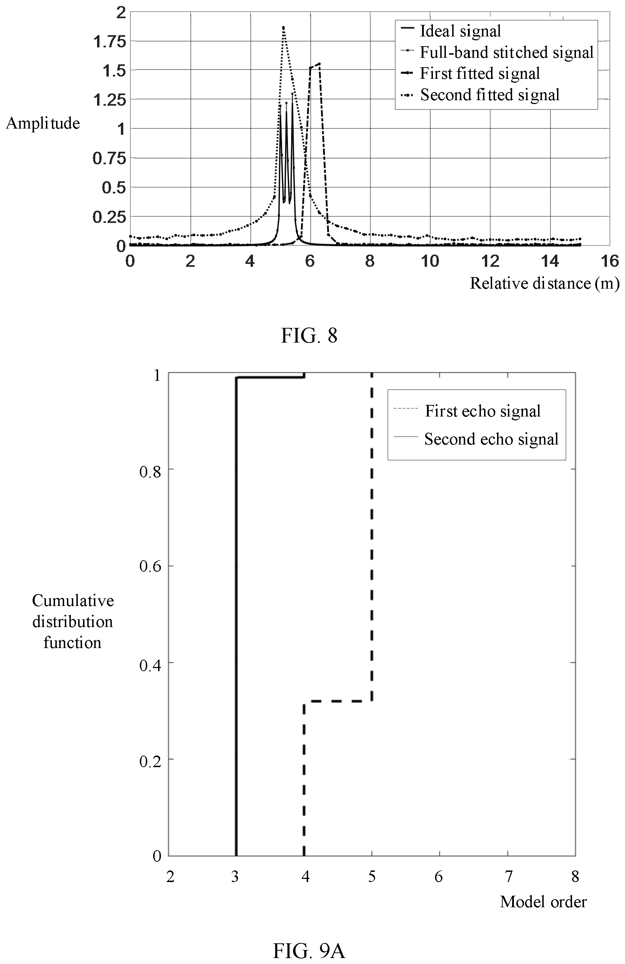

FIG. 8 is a diagram of time-domain effect of the full-band UWB signal obtained by stitching the upper and lower subbands in the simulation experiment according to this application. In FIG. 8, a horizontal coordinate represents a relative distance, and a vertical coordinate represents an amplitude of a signal in time domain. As shown in FIG. 8, the full-band UWB signal obtained by stitching the first fitted signal and the second fitted signal is also very close to the ideal UWB signal in time domain. In addition, it may be determined based on three peak values of the full-band stitched signal that there are three scattering centers in the environment, and horizontal axis coordinates corresponding to the three scattering centers are relative distances between the scattering centers and the second communication device.

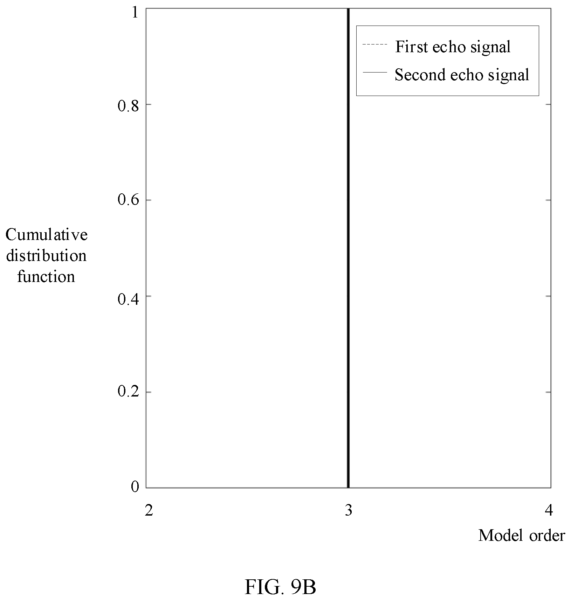

FIG. 9A and FIG. 9B are diagrams of model orders corresponding to different echo signals before and after scattering center pruning at a signal-to-noise ratio of 20 dB in the simulation experiment according to this application. As shown in FIG. 9A and FIG. 9B, a horizontal coordinate is a model order, and a vertical coordinate is a cumulative distribution function of the model order. It can be learned from FIG. 9A that, if pruning is not performed on scattering centers obtained by processing the echo signals, there is a high probability that the model order corresponding to the first echo signal is different from the model order corresponding to the second echo signal, and the model orders are unstable. It can be learned from FIG. 9B that, after pruning is performed on the scattering centers obtained by processing the echo signals, impact of a redundant scattering center on frequency band stitching can be avoided. Therefore, the model order corresponding to the first echo signal is the same as the model order corresponding to the second echo signal, and the model orders are very stable.

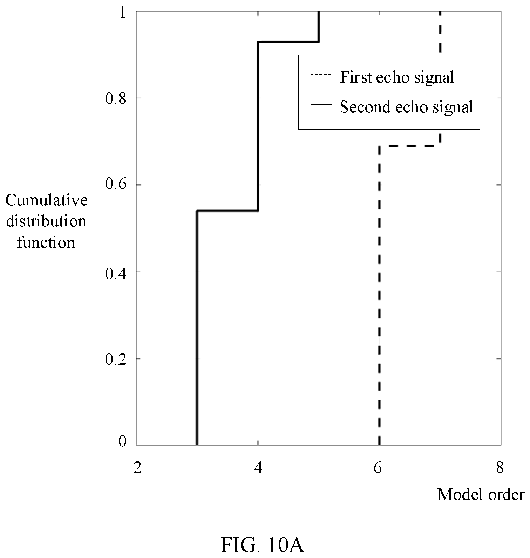

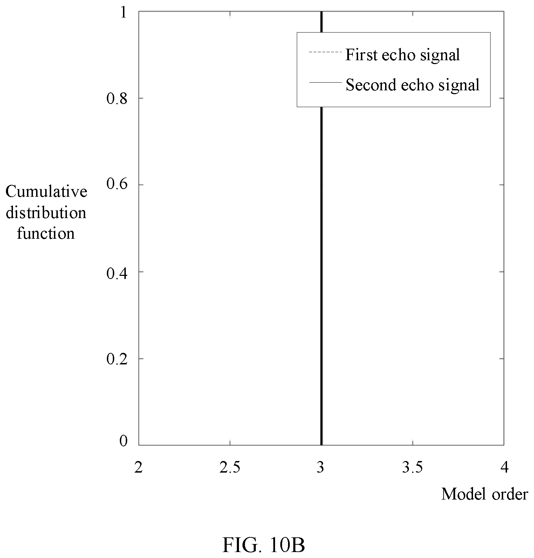

FIG. 10A and FIG. 10B are diagrams of model orders corresponding to different echo signals before and after scattering center pruning at a signal-to-noise ratio of 30 dB in the simulation experiment according to this application. FIG. 10A and FIG. 10B are similar to FIG. 9A and FIG. 9B. It can be learned from FIG. 10A that, in a case of a larger signal-to-noise ratio, if pruning is not performed on the scattering centers obtained by processing the echo signals, the model orders corresponding to the echo signals are more unstable. It can be learned from FIG. 10B that, in the case of the larger signal-to-noise ratio, scattering center pruning provided in this application can still effectively avoid impact of a redundant scattering center on frequency band stitching.

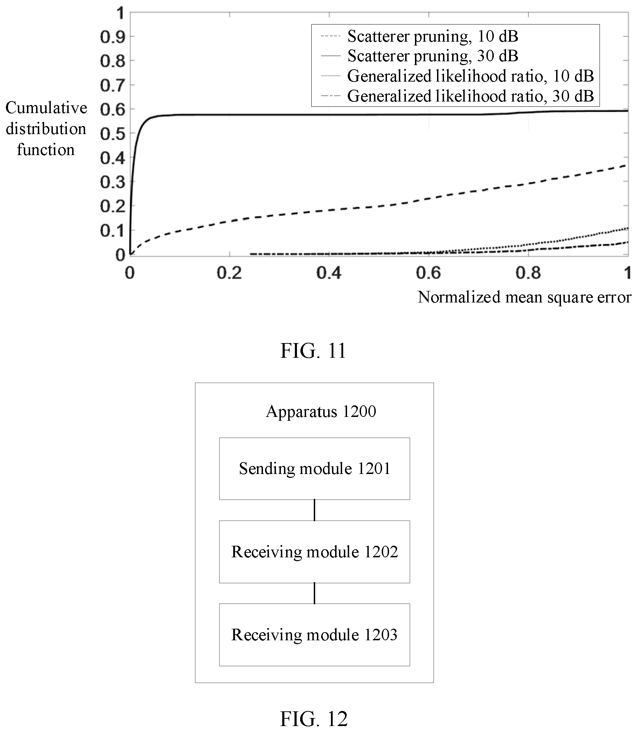

FIG. 11 is a comparison diagram of normalized mean square errors under different algorithms in the simulation experiment according to this application. In FIG. 11, a horizontal coordinate is a normalized mean square error, and a vertical coordinate is a cumulative distribution function of the normalized mean square error, where the normalized mean square error is a normalized mean square error between the full-band UWB signal obtained through stitching and the ideal UWB signal. In FIG. 11, the generalized likelihood ratio algorithm is an example algorithm for processing an echo signal in the conventional technology, and the scatterer pruning algorithm includes model order alignment and scattering center pruning in the foregoing embodiments. It can be learned from FIG. 11 that, at different signal-to-noise ratios, frequency band stitching accuracy using the scatterer pruning algorithm provided in this application is far higher than that using the generalized likelihood ratio algorithm.

FIG. 12 is a diagram of a structure of a frequency band stitching apparatus according to an embodiment of this application. As shown in FIG. 12, the apparatus 1200 in this embodiment may include: a sending module 1201, a receiving module 1202, and a processing module 1203. The apparatus 1200 may be configured to implement an operation implemented by the first communication device in the method shown in FIG. 3 or FIG. 4.

For example, the sending module 1201 may be configured to send a first sensing signal, where the first sensing signal is used to sense a target object in an environment.

The receiving module 1202 may be configured to receive first information from a second communication device, where the first information includes parameter information of a first echo signal, and the first echo signal is an echo signal of the first sensing signal. The receiving module 1202 may be further configured to receive a second echo signal, where the second echo signal is an echo signal of a second sensing signal.

The processing module 1203 is configured to determine an ultra-wideband UWB signal based on the second echo signal and the first information.

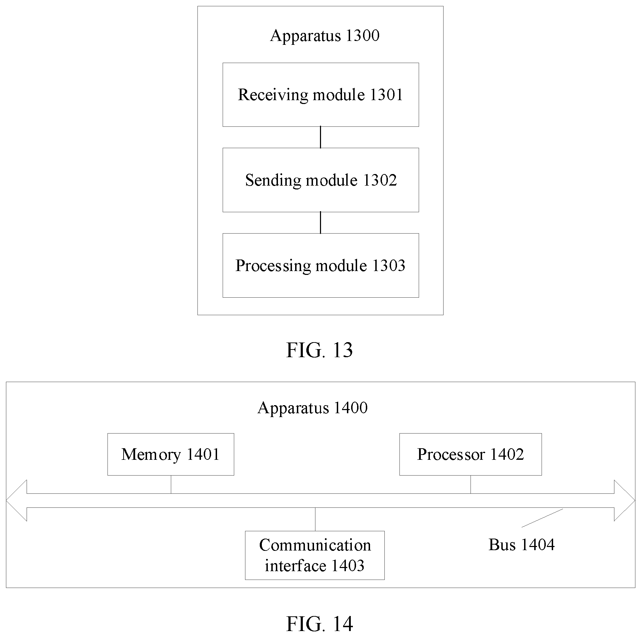

FIG. 13 is a diagram of a structure of a frequency band stitching apparatus according to another embodiment of this application. As shown in FIG. 13, the apparatus 1300 in this embodiment may include a receiving module 1301, a sending module 1302, and a processing module 1303. The apparatus 1300 may be configured to implement an operation implemented by the second communication device in the method shown in FIG. 3.

For example, the receiving module 1301 may be configured to receive a first echo signal resulting from reflection or scattering of the first sensing signal by a target.

The sending module 1302 may be configured to send first information to a first communication device, where the first information includes parameter information of the first echo signal, and the first echo signal is an echo signal of the first sensing signal. The sending module 1303 may be further configured to send a second sensing signal.

The processing module 1303 may be configured to obtain sensing information by processing the first echo signal.

In some implementations, the processing module 1303 may be further configured to prune a redundant scattering center based on relative distances and energy of scattering centers.

It should be understood that the apparatus 1200 and the apparatus 1300 are implemented in a form of functional modules. The term "module" may refer to a software module, or may refer to an application-specific integrated circuit, an electronic circuit, a processor (for example, a shared processor, a dedicated processor, or a group processor) configured to execute one or more software or firmware programs and a memory, a merged logic circuit, and/or another appropriate component that supports the described function.

The apparatus 1200 and the apparatus 1300 have functions of implementing corresponding procedures and/or steps in the method embodiments. The functions may be implemented by hardware, or may be implemented by hardware by executing corresponding software. The hardware or the software includes one or more modules corresponding to the function.

FIG. 14 is a diagram of a structure of a frequency band stitching apparatus according to still another embodiment of this application. The apparatus 1400 shown in FIG. 14 may be configured to perform the method performed by the frequency band stitching apparatus in any one of the foregoing methods.

As shown in FIG. 14, the apparatus 1400 in this embodiment includes: a memory 1401, a processor 1402, a communication interface 1403, and a bus 1404. The memory 1401, the processor 1402, and the communication interface 1403 are communicatively connected to each other through the bus 1404.

The memory 1401 may be a read-only memory (read-only memory, ROM), a static storage device, a dynamic storage device, or a random access memory (random access memory, RAM). The memory 1401 may store a program. When the program stored in the memory 1401 is executed by the processor 1402, the processor 1402 is configured to perform any one of the foregoing methods.

The processor 1402 may be a general-purpose central processing unit (central processing unit, CPU), a microprocessor, an application-specific integrated circuit, or one or more integrated circuits, and is configured to execute a related program.

The processor 1402 may alternatively be an integrated circuit chip and has a signal processing capability. In an implementation process, the related steps in embodiments of this application may be completed by using a hardware integrated logic circuit in the processor 1402 or instructions in a form of software.

The processor 1402 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like.

The steps of the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1401. The processor 1402 reads information in the memory 1401, and completes, in combination with hardware of the processor, functions that need to be performed by units included in the apparatus in this application.

The communication interface 1403 may use, but not limited to, a transceiver apparatus of a transceiver type, to implement communication between the apparatus 1400 and another device or apparatus.

The bus 1404 may include a path for transferring information between components (for example, the memory 1401, the processor 1402, and the communication interface 1403) of the apparatus 1400.

An embodiment of this application further provides a computer-readable storage medium. The computer-readable storage medium stores computer instructions. When executing the computer instructions, a processor implements the steps of the method in the foregoing embodiments.

An embodiment of this application further provides a computer program product, including computer instructions. When the computer instructions are executed by a processor, the steps of the method in the foregoing embodiments are implemented.

It should be noted that the modules or components shown in the foregoing embodiments may be one or more integrated circuits, for example, one or more application-specific integrated circuits, one or more microprocessors, or one or more field programmable gate arrays, configured to implement the foregoing methods. For another example, when one of the foregoing modules is implemented in a form of invoking program code by a processing element, the processing element may be a general-purpose processor, for example, a central processing unit, or another processor, for example, a controller, that can invoke the program code. For another example, the modules may be integrated and implemented in a form of a system-on-a-chip (system-on-a-chip, SoC).

All or some of the foregoing embodiments may be implemented by software, hardware, firmware, software modules, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

A person skilled in the art may easily figure out another implementation solution of this application after considering this specification and practicing the content disclosed herein. This application is intended to cover any variations, functions, or adaptive changes of this application. These variations, functions, or adaptive changes comply with general principles of this application, and include common knowledge or a commonly used technical means in the technical field that is not disclosed in this application. The specification and embodiments are merely considered as examples, and the actual scope and spirit of this application are pointed out by the following claims.

It should be understood that this application is not limited to the accurate structures that are described above and that are shown in the accompanying drawings, and various modifications and changes may be made without departing from the scope of this application. The scope of this application is limited only by the appended claims.

## Claims

1. A frequency band stitching method, applied to a first communication device, wherein the method comprises:
receiving first information from a second communication device, wherein the first information comprises parameter information of a first echo signal, and the first echo signal is an echo signal of a first sensing signal;
receiving a second echo signal, wherein the second echo signal is an echo signal of a second sensing signal; and
determining an ultra-wideband UWB signal based on the second echo signal and the first information.

2. The method according to claim 1, wherein the parameter information of the first echo signal comprises at least one of the following information: a frequency band of the first echo signal, a bandwidth of the first echo signal, a frequency difference between a center frequency of the first echo signal and a channel center frequency, a quantity of sampling points of the first echo signal, a real part of the first echo signal, an imaginary part of the first echo signal, or an identifier indicating a frequency band stitching reference signal.

3. The method according to claim 1 or 2, wherein the first information further comprises sensing information obtained based on the first echo signal.

4. The method according to claim 3, wherein the sensing information comprises at least one of the following information: a quantity of scattering centers, a relative distance distribution between the scattering center and a communication device that receives the first echo signal, or a geometric type parameter distribution of the scattering center.

5. The method according to claim 4, wherein a relative distance between any two of the scattering centers is greater than or equal to a second threshold, and/or an energy value corresponding to any one of the scattering centers is greater than or equal to a third threshold.

6. The method according to any one of claims 1 to 4, wherein determining the ultra-wideband UWB signal based on the second echo signal and the first information comprises:
obtaining a first fitted signal, wherein the first fitted signal is a signal obtained by fitting the first echo signal by using a first scattering center model;
obtaining a second fitted signal, wherein the second fitted signal is a signal obtained by fitting the second echo signal by using a second scattering center model, and a model order of the second scattering center model is the same as a model order of the first scattering center model; and
determining the UWB signal based on the first fitted signal and the second fitted signal.

7. The method according to claim 6, wherein a model order corresponding to the first echo signal is lower than a model order corresponding to the second echo signal, and the model order of the first scattering center model and the model order of the second scattering center model are the same as the model order corresponding to the first echo signal.

8. The method according to claim 6 or 7, wherein determining the ultra-wideband UWB signal based on the first fitted signal and the second fitted signal comprises:
if an error between the first fitted signal and the first echo signal is less than or equal to a first threshold, and an error between the second fitted signal and the second echo signal is less than or equal to the first threshold, fitting the first echo signal by using a third scattering center model to obtain a third fitted signal, and fitting the second echo signal by using a fourth scattering center model to obtain a fourth fitted signal, wherein a model order of the third scattering center model is the same as a model order of the fourth scattering center model, and the model order of the third scattering center model is less than the model order of the first scattering center model; and
determining the UWB signal based on the third fitted signal and the fourth fitted signal.

9. The method according to any one of claims 6 to 8, wherein determining the ultra-wideband UWB signal based on the first fitted signal and the second fitted signal comprises:
if the error between the first fitted signal and the first echo signal is greater than the first threshold, and the error between the second fitted signal and the second echo signal is greater than the first threshold, fitting the first echo signal by using a fifth scattering center model to obtain a fifth fitted signal, and fitting the second echo signal by using a sixth scattering center model to obtain a sixth fitted signal, wherein a model order of the sixth scattering center model is the same as a model order of the fifth scattering center model, and the model order of the fifth scattering center model is greater than the model order of the first scattering center model; and
determining the UWB signal based on the fifth fitted signal and the sixth fitted signal.

10. A frequency band stitching method, applied to a second communication device, wherein the method comprises:
sending first information to a first communication device, wherein the first information comprises parameter information of a first echo signal, and the first echo signal is an echo signal of a first sensing signal; and
sending a second sensing signal.

11. The method according to claim 10, wherein the parameter information of the first signal comprises at least one of the following information: a frequency band of the first echo signal, a bandwidth of the first echo signal, a frequency difference between a center frequency of the first echo signal and a channel center frequency, a quantity of sampling points of the first echo signal, a real part of the first echo signal, an imaginary part of the first echo signal, or an identifier indicating a frequency band stitching reference signal.

12. The method according to claim 10 or 11, wherein the first information further comprises sensing information obtained based on the first echo signal.

13. The method according to claim 12, wherein the sensing information comprises at least one of the following information: a quantity of scattering centers, a relative distance distribution between the scattering center and the second communication device, or a geometric type parameter distribution of the scattering center.

14. The method according to claim 13, wherein a relative distance between any two of the scattering centers is greater than or equal to a second threshold, and/or an energy value corresponding to any one of the scattering centers is greater than or equal to a third threshold.

15. The method according to any one of claims 10 to 14, wherein there is a preset association relationship between a frequency band in which the second sensing signal is located and the first information.

16. A frequency band stitching apparatus, wherein the frequency band stitching apparatus comprises a functional module configured to implement the frequency band stitching method according to any one of claims 1 to 9, or comprises a functional module configured to implement the frequency band stitching method according to any one of claims 10 to 15.

17. A frequency band stitching apparatus, comprising a processor and a memory, wherein
the memory stores computer-executable instructions; and
the processor executes the computer-executable instructions stored in the memory, to enable the frequency band stitching apparatus to perform the frequency band stitching method according to any one of claims 1 to 9 or the frequency band stitching method according to any one of claims 10 to 15.

18. A computer-readable storage medium, wherein the computer-readable storage medium stores computer-executable instructions, and when the computer-executable instructions are executed by a processor, the frequency band stitching method according to any one of claims 1 to 10 or the frequency band stitching method according to any one of claims 10 to 15 is implemented.

19. A computer program product, comprising a computer program, wherein when the computer program is executed by a processor, the frequency band stitching method according to any one of claims 1 to 9 or claims 10 to 15 is implemented.
